# EUROPEAN PATENT SPECIFICATION

(11) **EP 2 855 205 B1**
(45) Date of publication and mention of the grant of the patent: **30.03.2016**
(21) Application number: 12812411.2
(22) Date of filing: 26.10.2012
(51) Int. Cl.: B60Q 1/20, F21S 8/12, F21V 7/00

(54) **MOTOR VEHICLE FOG LIGHT COMPRISING A LIGHT SOURCE ON THE BASIS OF LED**
KRAFTFAHRZEUGNEBELLICHT MIT EINER LICHTQUELLE AUF LED-BASIS
PHARE ANTIBROUILLARD POUR VÉHICULE À MOTEUR COMPRENANT UNE SOURCE DE LUMIÈRE À BASE DE DEL

(30) Priority: 25.05.2012 SI 201200164
(43) Date of publication of application: 08.04.2015
(73) Proprietor: Hella Saturnus Slovenija, Proizvodnja svetlobne opreme za motorna in druga vozila, d.o.o., 1000 Ljubljana (SI)
(72) Inventor: CAJHEN, Tadej, 1236 Trzin (SI); HANZEL, Bostjan, 1000 Ljubljana (SI); RAZPOTNIK, Jure, 1281 Kresnice (SI); PAVCIC, Matjaz, 1000 Ljubljana (SI); PERKO, Borut, 1290 Grosuplje (SI)
(74) Representative: Borstar, Dusan
(86) International application number: PCT/SI2012/000059
(87) International publication number: WO 2013/176628

(56) References cited:
- WO-A1-2009/094819
- WO-A1-2012/036266
- JP-A- 2003 031 011
- JP-A- 2011 023 169
- JP-A- 2011 192 656

## Description

The proposed invention belongs to the field of transporting, more precisely to lightning equipment for motor vehicles, namely to fog lights, where a sequence of LEDs, namely light emitting diodes, is used as a light source.

The purpose of the invention is to create a fog light, where the required optical characteristics of the fog light in the view of achieving a bright/dark border and preventing of reflecting glare could be achieved despite to application of cheap classic single LEDs (i.e. "single chip LEDs" or "chip size LEDs" or "single chip based LEDs") instead of special "multi chip LEDs".

Legal regulations concerning fog lights (like e.g. STM) require achieving of the so-called bright/dark border. The first reason for that is preventing of reflection glare due to uncontrolled directing of light beams in undesired directions above the horizontal plane extending through the optical axis of the fog light, since said glare may impact other traffic participants, in particular drivers of vehicles approaching from opposite direction.

The second reason for that refers to adjusting of the light beam on the vertical direction. Consequently, the present regulations define a bright/dark border, which should extend at 1 below the optical axis of the light, by which also sharpness i.e. a contrast of said bright/dark border in the sense of gradient of illumination.

According to the prior art, said bright/dark border can be achieved either by using a screen or by means of a surface-directing reflector combined with a special light source in the form of a very precisely manufactured "multi-chip" LED.

Whenever the bright/dark border is achieved by means of a screen, the last is mounted in the focus of a condensing lens of the fog light in order to determine the border between the light permeable and light screening area. Consequently, the gradient of illumination in the area of said bright/dark border is acceptable, but the position of said border is difficultly achieved, since it crucially depends on accuracy of mounting said screen. In practice, only a part of light rays blocked by screen are then redirected into appropriate direction, and the rest is dissipated, which leads to reduction of illuminating capability and efficiency of the light as such. Besides, such screen represents an additional part of the light, which is relatively complicated from quite manufacturing aspects, which usually essentially increases the production costs. The major problem is however said precise assembling, since even minor deviations of the position of such screen result in essential deviations of the bright/dark border.

On the other hand, a combination of a surface-directing reflector and a light source in the form of a "multi-chip" LED can also be used. Those skilled in the art are aware that such multi-sliced or "multi-chip" LEDs are commercially available, but are technologically an extremely sophisticated product, in which several flat rectangular LEDs are minimally separated apart from each other and linearly aligned in a sequence, by which a quality light source is obtained with an acceptable contrast between the illuminated and dark area, but the price of such product, at least when compared with conventional "single chip" LEDs is extremely high and beyond the reality in the field of fog lights. However, a successful solution of the previously mentioned technical problem could despite to these circumstances enable economically acceptable exploitation af LEDs even in the field of fog lights.

A vehicle headlamp is disclosed in WO 2012/036266 A1, which comprises a light source on the basis of LED, a casing with a light permeable front wall, a reflector, which is embedded within said casing and comprises two opposite active reflecting surfaces, which are located apart from each other and above each other and coincide towards said rear surface, as well as two opposite supplemental reflecting surfaces, which are among others adapted to determine a width of the light beam and are also arranged apart from each other between said active reflecting surfaces and coincidc towards the rear portion of the reflector. Said light source is arranged within the interior of the reflector and is adapted to cooperate with the previously mentioned reflecting surfaces, so that each light beams generated by said light source are directed to each desired direction. Said light source consists of a sequence of flat rectangular LEDs which are arranged apart from each other in at least approximately linear alignment. Said light source is mounted on a plate, which is located behind the reflector. Since the reflector is also functioning as a screen determining the bright/dark border, the reflector and said plate with the light source must be very precisely assembled and protected against displacing e,g. due to vibrations or thermal extensions. In order to assure each desired bright/dark border, the previously mentioned "multi chip" LED must be used.

A further vehicle headlight is disclosed in JP 2011 192656 A and comprises a light source consisting of a plurality of linearly arranged LEDs, a wavelength conversion material layer, which covers the periphery of said LEDs in a rectangular shape with a horizontally-long aspect ratio and which at least a part of the boundary of its periphery has a straight side edge. the light also comprises a reflector., which is arranged upward on an optical axis at the rear of said linear light source. The straight side edge of the linear light source is located on a focal point of the reflector. The light emitting face is arranged facing nearly upward and the whole thereof is forward on the focal point of the reflective member. The straight side edge forms a part of brightness boundary line in the light distribution pattern. Again, a correct bright/dark border can only be achieved by using said expansive "multi chip" LED, optionally in combination with a supplemental screen or bezel.

The proposed invention refers to a motor vehicle fog light comprising a light source on the basis of LED, wherein such fog light comprises a casing with a light permeable front wall, a surface-directing reflector, which is embedded within said casing and comprises at least a rear surface, which is optionally a reflecting surface, as well as two opposite active reflecting surfaces, which are located apart from each other and above each other and coincide towards said rear surface, and moreover also two opposite supplemental reflecting surfaces which are among others adapted to determine a width of the light beam and are also arranged apart from each other between said active reflecting surfaces and also coincide towards said rear surface. Besides, said fog light also comprises a light source, which is arranged within the interior of the reflector and is adapted to cooperate with the previously mentioned reflecting surfaces, so that light beams, which are generated by the light source, are directed to each desired direction, wherein said light source consists of a sequence of flat rectangular LEDs, which are arranged apart from each other in at least approximately linear alignment.

Said reflector comprises
- a linear rear wall with a straight central line;
- a linear focus, which is arranged at a pre-determined focal distance apart from said central line of the rear surface and extends parallel to said central line;
- at least approximately parabolic active reflecting surfaces; and
- flat supplemental reflecting surfaces.

The light source is available in the form of a sequence of rectangular flat LEDs, which are each per se conventional "single chip" i.e. "chip size" LEDs, which are along the complete length of said sequence arranged equidistantly apart from each other in a linear alignment along the focal line (extending parallel to the central line of the rear surface of the reflector.

Said sequence of linearly aligned LEDs extends within a pre-determined area, which is defined on the basis of maximal deviations of the position of each disposable LED apart from the linear focus below and/or above said linear focus.

The supplemental reflecting surfaces are arranged either at least approximately rectangular or inclined with respect to the rear surface of the reflector. In the reflector, the height of which in a direction of the optical axis is between 25 and 40 mm, the focal distance between the focus and the central line on the rear surface of the reflector is 5 to 16 mm. The light source consists or a sequence of a defined length and of equidistantly apart from each other arranged "single chip" i.e. "chip size" LEDs, wherein said sequence has a length and wherein each LED in said sequence is located within the pre-determined area, which is defined by means of allowable deviation of the position of each LED, which is less than 0,2 mm below the linear focus and less than 0,4 mm above the linear focus.

The invention will be described in more detail on the basis of an embodiment, which is shown in the attached drawing, where
- Fig. 1: is a schematically presented front view of a motor vehicle fog light comprising a light source on the basis of LED;
- Fig. 2: is a separate perspective view of a reflector of said fog light according to the invention;
- Fig. 3: is a cross-section along the plane A - A according to Fig. 2; and
- Fig. 4: is a cross-section along the plane B - B according to Fig. 2.

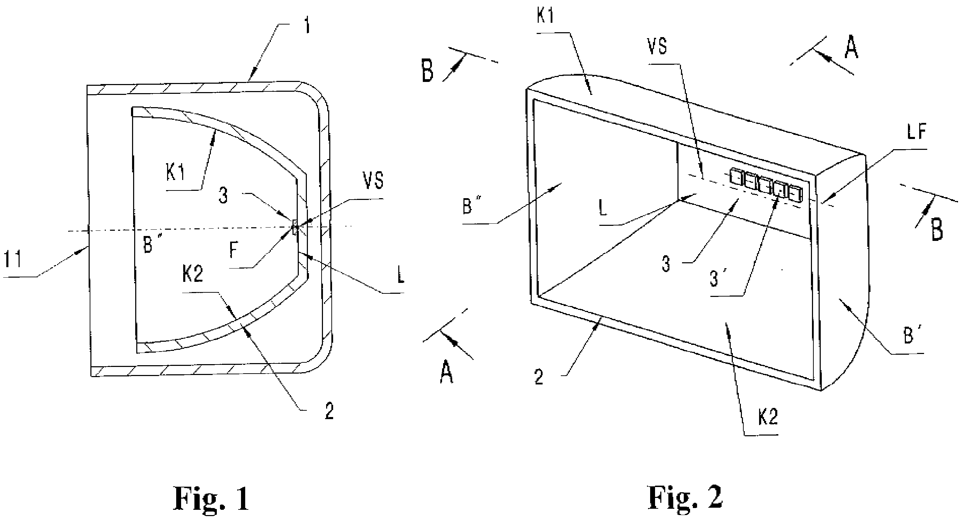

A motor vehicle fog light with a light source 3 on the basis of LED (Fig. 1) comprises a casing 1 with a light permeable front wall 11, a so-called surface-directing reflector 2 as well as a light source 3.

Said surface-directing reflector 2 is embedded within the casing 1 and comprises at least a rear surface L, which is optionally a reflecting surface, as well as two opposite active reflecting surfaces K1, H2, which are located apart from each other and above each other and coincide towards said rear surface L, as well as two opposite supplemental reflecting surfaces B', B", which are among others adapted to determine a width of the light beam and are also arranged apart from each other between said active reflecting surfaces K1, K2 and coincide towards said rear surface L.

Said light source 3 is arranged within the interior of the reflector 2 and is adapted to cooperate with the previously mentioned reflecting surfaces K1, K2, B', B", L, so that light beams, which are generated by the light source 3, are directed to each desired direction. Said light source 3 consists of a sequence of flat rectangular LEDs 3', which are arranged apart from each other in at least approximately linear alignment..

Moreover, the fog light according to the invention is characterized by the reflector 3 (Fig. 2), which comprises
- a linear rear wall L with a straight central line VS;
- a linear focus LF, which is arranged at a pre-determined focal distance F apart from said central line VS of the rear surface L and extends parallel to said central line VS;
- at least approximately parabolic active reflecting surfaces K1, K2; and
- flat supplemental reflecting surfaces B', B".

Said supplemental reflecting surfaces B', B" are arranged either at least approximately rectangular or inclined with respect to the rear surface L of the reflector 2.

Moreover, the light source 3 is characteristic for the fog light according to the invention and is available in the form of a sequence of rectangular flat LEDs 3', which are along the complete length Y of said sequence arranged in a linear alignment and are equidistantly separated apart from each other, wherein each of these LEDs 3' per sc is available as a conventional "single chip" LED and is therefore in view of technologic aspects much more simple, much easier to purchase and also much cheaper than the very special "multi chip" LEDs, which are generally known in the art and commercially available under the trademark OSTAR^{®} of the manufacturer OSRAM. Said LEDs 3' of each sequence are each per se arranged along the focal line LF extending parallel to the central line VS of the rear surface L of the reflector 2.

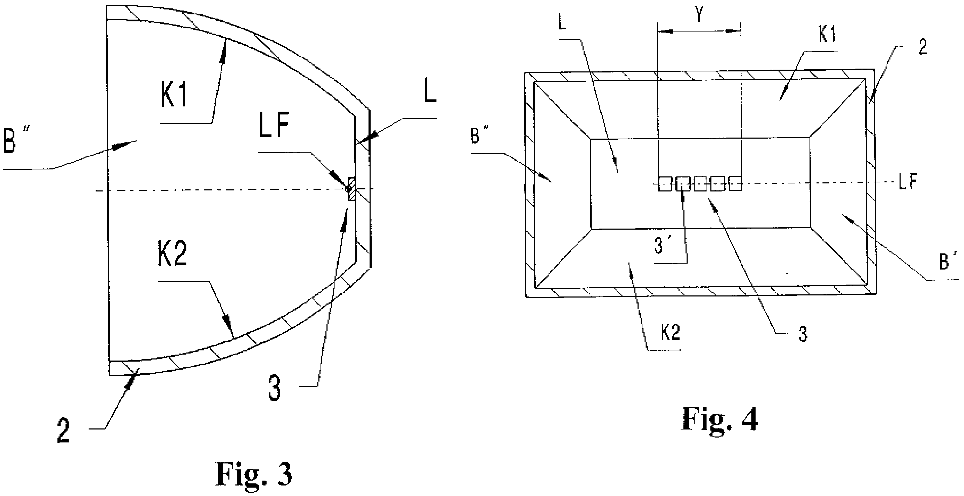

Moreover, the fog light according to the invention is characterized in that the sequence of linearly aligned LEDs 3' extends within a pre-determined area, which is defined on the basis of maximal deviations of the position of each disposable LED 3' apart from the linear focus LF below and/or above said linear focus LF (Figs. 3 and 4).

In the fog light, where for example the height of the reflector 2 in a direction of the optical axis is between 25 and 40 mm, the focal distance F between the focus LF and the central line VS on the rear surface L of the reflector 2 can be 5 to 16 mm. The light source 3 consists of a sequence of "single chip" i.e. "chip size" LEDs 3', which are arranged equidistantly apart from each other, said sequence having the length Y and each LED 3' in the sequence is located within the pre-determined area, which is defined by means of still allowable deviation of the position of each LED 3' less than 0,2 mm below the linear focus LF and less than 0,4 mm above the linear focus LF.

Consequently, when previously mentioned features of the reflector 2 and the light source 3 are considered, despite to substitution of special "multi chip" LEDs with a sequence of essentially cheaper and acceptable "single chip" LEDs, the required optical characteristics of the fog light can also be achieved, wherein the light beams are directed in each desired direction in order to prevent reflecting glare and to assure a correct position and contrast of a bright/dark border.

## Claims

1. Motor vehicle fog light comprising a light source (3) on the basis of LED, said fog light also comprising a casing (1) with a light permeable front wall (11), a surface-directing reflector (2), which is embedded within said casing (1) and comprises at least a rear surface (L) with a straight central line (VS), which is optionally a reflecting surface, as well as two opposite active reflecting surfaces (K1, K2), which are located apart from each other and above each other and coincide towards said rear surface (L), and moreover also two opposite flat supplemental reflecting surfaces (B', B") which are adapted to determine a width of the light beam and are also arranged apart from each other between said active reflecting surfaces (K1, K2) and coincide towards said rear surface (L), and moreover, said fog light also comprises a light source (3), which is arranged within the interior of the reflector (2) such that light beams generated by the light source are by means of said reflecting surfaces (K1, K2, B', B", L) directed to each desired direction, wherein said light source (3) consists of a sequence of flat rectangular LEDs (3'), which are arranged apart from each other in at least approximately linear alignment, **characterized in that**
said reflector (2), the height of which in a direction of the optical axis is between 25 and 40 mm, the focal distance (F) between the focus (LF) and the central line VS on the rear surface (L) of the reflector (2) is 5 to 16 mm is furnished with a linear focus (LF), which is arranged at a pre-determined focal distance (F) apart from said central line (VS) of the rear surface (L) and extends parallel to said central line (VS),
and comprises at least approximately parabolic active reflecting surfaces (K1, K2), wherein the light source (3) is available in the form of a sequence of flat rectangular LEDs (3'), which are each per se conventional "single chip" i.e. "chip size" LEDs, which are along the complete length (Y) of said sequence arranged equidistantly apart from each other in a linear alignment along the focal line (LF) extending parallel to the central line (VS) of the rear surface (L) of the reflector (2),
and wherein said sequence of linearly aligned LEDs (3') extends within a pre-determined area, which is defined on the basis of maximal deviations of the position of each disposable LED (3') apart from the linear focus (LF) below and/or above said linear focus (LF), namely less than 0,2 mm below the linear focus (LF) and less than 0,4 mm above the linear focus (LF).

## Patentansprüche

1. Kraftfahrzeug-Nebelscheinwerfer, der eine Lichtquelle (3) auf der Basis einer LED umfasst, wobei der Nebelscheinwerfer des Weiteren Folgendes umfasst: ein Gehäuse (1) mit einer lichtdurchlässigen vorderseitigen Wand (11), einen oberflächenrichtenden Reflektor (2), der in das Gehäuse (1) eingebettet ist und mindestens eine Rückfläche (L) mit einer geradlinigen Mittelachse (VS) umfasst, die optional eine reflektierende Oberfläche ist, sowie zwei gegenüberliegende aktive reflektierende Flächen (K1, K2), die in einem Abstand zueinander und übereinander angeordnet sind und in Richtung der Rückfläche (L) miteinander übereinstimmen, und darüber hinaus noch zwei gegenüberliegende flache ergänzende reflektierende Flächen (B', B"), die dazu ausgelegt sind, eine Breite des Lichtstrahls zu bestimmen, und ebenfalls in einem Abstand zueinander zwischen den aktiven reflektierenden Flächen (K1, K2) angeordnet sind und in Richtung der Rückfläche (L) miteinander übereinstimmen, und der Nebelscheinwerfer darüber hinaus auch eine Lichtquelle (3) umfasst, die im Inneren des Reflektors (2) dergestalt angeordnet ist, dass durch die Lichtquelle generierte Lichtstrahlen mittels der reflektierenden Flächen (K1, K2, B', B", L) in jede gewünschte Richtung gelenkt werden, wobei die Lichtquelle (3) aus einer Abfolge von flachen rechteckigen LEDs (3') besteht, die in mindestens ungefähr linearer Ausrichtung in einem Abstand voneinander angeordnet sind, **dadurch gekennzeichnet, dass**
der Reflektor (2), dessen Höhe in einer Richtung der optischen Achse zwischen 25 und 40 mm beträgt, wobei die Brennweite (F) zwischen dem Fokus (LF) und der Mittelachse (VS) auf der Rückfläche (L) des Reflektors (2) 5 bis 16 mm beträgt, mit einem linearen Fokus (LF) versehen ist, der in einer zuvor festgelegten Brennweite (F) von der Mittelachse (VS) der Rückfläche (L) entfernt angeordnet ist und parallel zu der Mittelachse (VS) verläuft,
und mindestens ungefähr parabolische aktive reflektierende Flächen (K1, K2) umfasst, wobei die Lichtquelle (3) In Form einer Abfolge von flachen rechteckigen LEDs (3') verfügbar ist, die jeweils an sich vom herkömmlichen "Einzelchip"-Typ, d. h. LEDs in "Chip-Größe", sind, die entlang der gesamten Länge (Y) der Abfolge in gleichem Abstand voneinander in einer linearen Ausrichtung entlang der Fokuslinie (LF) angeordnet sind, die parallel zu der Mittenachse (VS) der Rückfläche (L) des Reflektors (2) verläuft,
und wobei sich die Abfolge von linear ausgerichteten LEDs (3') innerhalb eines zuvor festgelegten Bereichs erstreckt, der auf der Basis maximaler Abweichungen der Position jeder entsorgbaren LED (3') von dem linearen Fokus (LF) fort unter und/oder über dem linearen Fokus (LF), namentlich weniger als 0,2 mm unter dem linearen Fokus (LF) und weniger als 0,4 mm über dem linearen Fokus (LF), definiert ist.

## Revendications

1. Phare antibrouillard pour véhicule à moteur comprenant une source de lumière (3) sur la base d'une LED, ledit phare antibrouillard comprenant également un boîtier (1) avec une paroi frontale perméable à la lumière (11), un réflecteur de direction de surface (2), qui est incorporé à l'intérieur dudit boîtier (1) et comprend au moins une surface arrière (L) avec un axe droit (VS), qui est facultativement une surface réfléchissante, ainsi que deux surfaces réfléchissantes actives opposées (K1, K2), qui sont situées à distance l'une de l'autre et l'une au-dessus de l'autre et convergent vers ladite surface arrière (L), et en outre deux surfaces réfléchissantes supplémentaires plates opposées (B', B") qui sont adaptées pour déterminer une largeur du faisceau de lumière et sont également agencées à distance l'une de l'autre entre lesdites surfaces réfléchissantes actives (K1, K2) et convergent vers ladite surface arrière (L), et en outre, ledit phare antibrouillard comprend également une source de lumière (3), qui est agencée à l'intérieur du réflecteur (2) de telle sorte que des faisceaux de lumière générés par la source de lumière sont dirigés au moyen desdites surfaces réfléchissantes (K1, K2, B', B", L) dans chaque direction souhaitée, ladite source de lumière (3) étant constituée par une séquence de LED rectangulaires plates (3'), qui sont agencées à distance les unes des autres dans au moins un alignement approximativement linéaire, **caractérisé en ce que**
ledit réflecteur (2), dont la hauteur dans une direction de l'axe optique se situe entre 25 et 40 mm, la distance focale (F) entre le foyer (LF) et l'axe (VS) sur la surface arrière (L) du réflecteur (2) est de 5 à 16 mm, est pourvu d'un foyer linéaire (LF), qui est agencé à une distance focale (F) prédéterminée à distance dudit axe central (VS) de la surface arrière (L) et s'étend de manière parallèle audit axe (VS),
et comprend des surfaces réfléchissantes actives au moins approximativement paraboliques (K1, K2), la source de lumière (3) étant disponible sous la forme d'une séquence de LED rectangulaires plates (3'), qui sont chacune des LED « à une seule puce », c'est-à-dire « de la taille d'une puce », conventionnelles en soi, qui sont sur la longueur complete (Y) de ladite séquence agencées à la même distance les unes par rapport aux autres dans un alignement linéaire le long de l'axe focal (LF) s'étendant de manière parallèle à l'axe (VS) de la surface arrière (L) du réflecteur (2),
et ladite séquence de LED alignées de manière linéaire (3') s'étendant au sein d'une aire prédéterminée, qui est définie sur la base des écarts maximaux de la position de chaque LED jetable (3') à distance du foyer linéaire (LF) en dessous et/ou au-dessus dudit foyer linéaire (LF), à savoir moins de 0,2 mm en dessous du foyer linéaire (LF) et moins de 0,4 mm au-dessus du foyer linéaire (LF).
